(19) **Europäisches Patentamt / European Patent Office / Office européen des brevets**

(11) **EP 1 493 297 B1**

(12) **EUROPEAN PATENT SPECIFICATION**

(45) Date of publication and mention
of the grant of the patent:
**30.05.2007 Bulletin 2007/22**

(21) Application number: **03745388.3**

(22) Date of filing: **31.03.2003**

(51) Int Cl.:
*H04Q 7/38* (2006.01)     *H04Q 7/36* (2006.01)

(86) International application number:
**PCT/IL2003/000265**

(87) International publication number:
**WO 2003/084272 (09.10.2003 Gazette 2003/41)**

(54) **DETERMINING CELL SERVICE AREAS IN A WIRELESS NETWORK**

BESTIMMUNG DES ZELLEN-DIENSTGEBIETES IN EINEM DRAHTLOSEN NETZWERK

DETERMINATION DE ZONES DE SERVICE CELLULAIRE DANS UN RESEAU SANS FIL

(84) Designated Contracting States:
**DE ES FR GB IT**

(30) Priority: **01.04.2002 US 369368 P**
**29.10.2002 US 282482**

(43) Date of publication of application:
**05.01.2005 Bulletin 2005/01**

(73) Proprietor: **Schema Ltd.**
**46905 Herzeliya (IL)**

(72) Inventors:
• **SHAFRAN, Gil**
**92346 Jerusalem (IL)**
• **FREYDIN, Boris**
**76246 Rehovot (IL)**

• **LAHAV, Shlomo**
**52364 Ramat Gan (IL)**
• **ZOLLER, Tal**
**Haifa (IL)**
• **SCHWARZFUCHS, Joseph**
**93306 Jerusalem (IL)**
• **CUPERMAN, Moshe**
**49742 Petach Tikva (IL)**

(74) Representative: **Midgley, Jonathan Lee et al**
**Scott & York**
**Intellectual Property Ltd**
**45 Grosvenor Road**
**St. Albans**
**Hertfordshire, AL1 3AW (GB)**

(56) References cited:
**GB-A- 2 334 185     US-A- 5 465 390**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

**FIELD OF THE INVENTION**

The present invention relates generally to optimization of resource use in mobile communication networks, and specifically to determining service areas of cells in such networks.

**BACKGROUND OF THE INVENTION**

In a cellular communication network, the region served by the network is divided into a pattern of cells. Each cell has one or more antennas that communicate with mobile units (cellular telephones and/or data terminals) within its service area. The strength of the signals reaching the mobile units from the antennas, and *vice versa,* are determined by the path loss of electromagnetic waves propagating between the antennas and the mobile unit locations. If the received signal level at a given location is too low, poor quality or coverage holes will result. In planning cellular networks, path loss maps are typically used to locate and orient the antennas and determine the power levels needed to avoid such holes. Drive tests - in which antenna signals are measured at different locations by a test van driving through the service region - provide additional data that can be used in analyzing and optimizing network performance.

Each cell in a narrowband cellular network is assigned a fixed set of frequencies. (Narrowband networks include Time Division Multiple Access [TDMA] networks, such as Global System for Mobile [GSM] communication networks. Code Division Multiple Access [CDMA] networks assign a broad frequency band to each cell.) When a mobile unit initiates or receives a call, it is assigned to one of the frequencies of its serving cell. As the mobile unit travels within the network service region, it may leave the service area of one cell and enter another. : When the mobile unit moves through an area of overlap between cells, it may be handed over from its current serving cell to a new cell. Typically, the handover occurs when the signal received by the mobile unit from its serving cell drops below some minimum threshold, and the signal from the new cell is significantly stronger than the serving cell signal.

GB 2,334,185 and US 5,465,390 both describe systems which dynamically determine the handover criteria for determining when to switch a mobile unit from its current serving cell to a new cell. US 5,465,390 bases its determination on the perspective of the mobile terminal whereas GB 2,334,185 bases it on a classification of the relationship between the serving cell and neighbouring cells.

Some new cellular networks have a hierarchical cell structure (HCS), in which overlapping cells of different sizes cover the same geographical areas. A network of this type is described, for example, in U.S Patent 6,205,336.

In a HCS, small "microcells" operating in one frequency band, such as the 1800-1900 MHz range, are overlapped by larger "macrocells" in another frequency band, such as the 800-900 MHz range. As one macrocell typically covers a number of microcells, the macrocell may also be referred to as an "umbrella" celL Mobile units in a HCS network are preferably capable of operating in both the microcell and macrocell frequency bands. Normally, when a mobile unit is served by a microcell, and the signal reaching the mobile unit from the serving cell drops below the handover threshold, the mobile unit will be handed over to another cell at the same level in the hierarchy. If there is no other microcell available, however, the mobile unit may be handed over to a macrocell, in an "umbrella handover."

In planning the location and configuration of antennas and the allocation of frequencies in a cellular network, it is important to take into account the service areas of all the cells. The cell service areas determine the dynamics of handover between cells, as well as the extent to which different cells operating at the same frequency may interfere with one another. Insofar as possible, cells whose service areas overlap significantly should not be assigned the same frequencies. Otherwise, a mobile unit in the overlap area that is communicating with one of the cells will experience interference from the other cell. Therefore, an accurate map of cell service areas can be very useful in optimizing cellular network performance.

**SUMMARY OF THE INVENTION**

It is an object of some aspects of the present invention to provide improved methods and systems for estimating cell service areas.

In preferred embodiments of the present invention, the service areas of cells in a cellular communication network are estimated based on probabilities of handover among the cells. At each of a number of locations (or geographical "bins") in the network service region, a matrix of handover probabilities is determined, corresponding to the likelihood that a mobile unit served by one cell at the location will be handed off to each other cell that could serve the location. The handover probabilities are typically based on the measured or estimated strengths of the signals received at the location from the different cells, taking into account random variations that naturally occur in the received signal levels. The matrix of handover probabilities at each location is then solved to find, for each cell, the steady-state probability that the cell will serve a mobile unit at this location. Because of the nature of the handover process, the solution may be found using Markov chain theory, as is known in the art of probability and stochastic processes.

The steady-state probabilities for all the locations, covering the entire region of interest, are combined in order to estimate the service areas of the cells. The service area for a given cell is considered to include all locations in which the probability of service by the cell is non-zero, or above a certain minimal probability threshold. Because this approach accounts for the dynamics of handovers in determining cell service areas, it gives a more accurate picture of cellular network behavior than do methods of service area determination known in the art, which are typically based simply on static signal levels. The improved estimate of cell service areas provided by the present invention thus allows more effective optimization of antenna positioning and frequency allocation.

The methods of the present invention may be extended in a straightforward manner to mobile communication networks having hierarchical cell structures, as described above. In addition, although preferred embodiments are described herein with particular reference to narrowband cellular networks, the principles of the present invention may also be applied, with appropriate modification, to broadband networks, such as CDMA-based cellular networks.

There is therefore provided, in accordance with the present invention, a method for analyzing service in a mobile communication network, as set out in Claim 1.

Preferably, estimating the probabilities includes determining signal levels received by the mobile unit from each of the cells in the plurality, and computing the probabilities responsive to the signal levels. Most preferably, computing the probabilities includes making a comparison between the signal levels received by the mobile unit from a serving cell and from a target cell, selected from among the plurality of cells, and determining a likelihood of the handover from the serving cell to the target cell responsive to the comparison. Typically, the signal levels are characterized by a random variation, and determining the signal levels includes determining a statistical distribution of the signal levels responsive to the random variation, and computing the probabilities includes finding the probabilities responsive to the statistical distribution.

In a preferred embodiment, finding the respective steady state probability includes constructing a Markov chain transition matrix based on the probabilities of handover, and solving the transition matrix to calculate the respective steady state probability that the mobile unit is served by each of the one or more of the cells.

Preferably, estimating the probabilities of handover includes estimating the probabilities at each of a multiplicity of locations in a region served by the network, and finding the respective steady-state probability includes determining the probability that each of the one or more cells is the serving cell for the mobile unit at each of the locations. Most preferably, estimating the probabilities at each of the multiplicity of locations includes dividing the region into geographical bins, and determining the probability includes computing the probability that each of the one or more of the cells is the serving cell in each of the bins.

Additionally or alternatively, the method includes determining a service area of at least one of the cells based on the probability that the at least one of the cells is the serving cell at each of the locations. Preferably, the service area of the at least one of the cells is determined to include all of the locations at which the probability that the at least one of the cells is the serving cell is greater than a predetermined minimum probability.

In a preferred embodiment, estimating the probabilities of handover includes estimating a likelihood of an umbrella handover in a hierarchical cellular system (HCS), and finding the steady-state probability includes computing the probability of service by the cells at different levels of the HCS.

The mobile communication network may include either a time-division multiple access (TDMA) network or a code-division multiple access (CDMA) network.

There is also provided, in accordance with the present invention, apparatus as set out in Claim 7, and a computer software product as set out in Claim 9.

The present invention will be more fully understood from the following detailed description of the preferred embodiments thereof, taken together with the drawings in which:

## BRIEF DESCRIPTION OF THE DRAWINGS

Fig. 1 is a schematic, pictorial view of a region served by a cellular communication network, in accordance with a preferred embodiment of the present invention;

Fig. 2 is a flow chart that schematically illustrates a method for controlling handover of a mobile unit in a cellular communication network; and

Fig. 3 is a flow chart that schematically illustrates a method for finding probabilities that a mobile unit at a given location in a cellular communication network is served by various cells in the network, in accordance with a preferred embodiment of the present invention.

**DETAILED DESCRIPTION OF PREFERRED EMBODIMENTS**

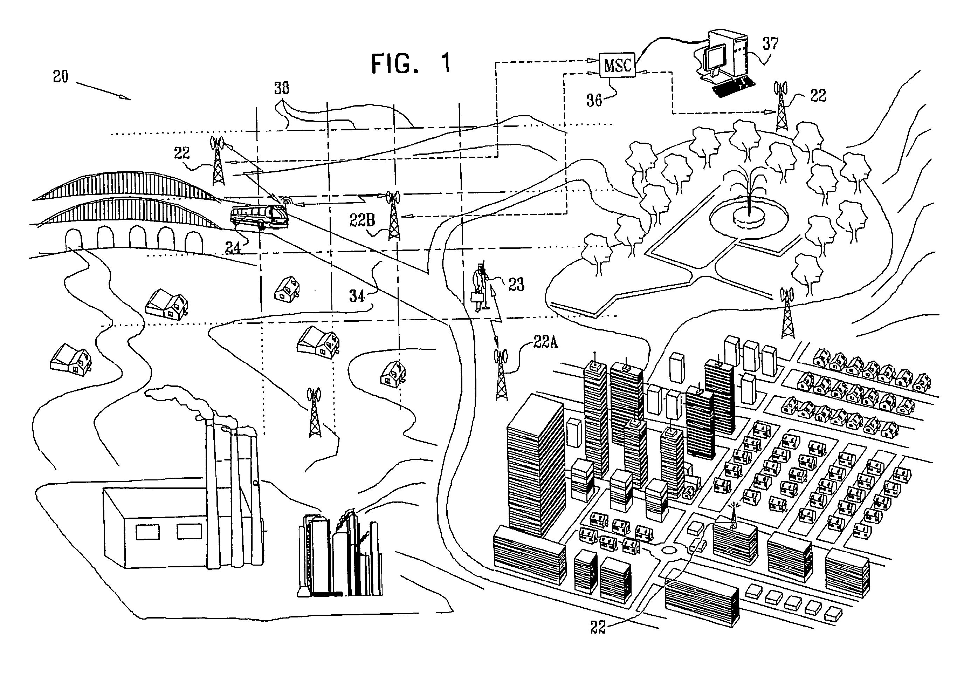

Fig. 1 is a schematic, pictorial view of a region 20 served by a cellular communication network, in which cell service areas are determined in accordance with a preferred embodiment of the present invention. For the purposes of the cellular network, region 20 is divided into partly-overlapping cells, each served by one or more fixed transceivers, represented by antennas 22. By way of example, an antenna 22A serves a cell, which will be referred to as cell A, in which a mobile unit 23 is being used to carry on a telephone call. Another antenna 22B serves a neighboring or nearby cell, which will be referred to as cell B. In the course of a telephone call, particularly while traveling, mobile unit 23 may be handed over from cell A to cell B, meaning that antenna 22B serves the mobile unit in place of antenna 22A. Furthermore, if the cellular network and mobile unit are suitably configured for multi-band operation, the mobile unit may be handed over from a microcell to a macrocell, or *vice versa.*

Communication traffic in the cellular network serving region 20 is controlled and routed among antennas 22 by a mobile switching center (MSC) 36, as is known in the art. Typically, either the MSC or a base station controller (BSC - not shown) is responsible for controlling and tracking handovers of mobile units within the cellular network. Preferably, a test van 24, driving on roads 34 through region 20, is used to collect statistics regarding the strengths of signals transmitted by different antennas 22 at many different locations in the region. Alternatively or additionally, the mobile units themselves may measure signal levels and report their results to the MSC. The drive test and/or mobile measurement results are passed to a computer 37 for analysis.

Additionally or alternatively, computer 37 receives network performance statistics gathered by MSC 36 and/or other information concerning the network configuration. This other information may include, for example, the configurations of antennas 22, such as their frequency allocations, locations, height, transmission power, azimuth and tilt; geographical features of region 20; and path loss maps, showing the attenuation of electromagnetic waves propagating between each of the antennas and different mobile unit locations in region 20. Such information may be used in estimating signal levels due to different antennas, in conjunction with or instead of the actual measurement results in the field.

Computer 37 processes the signal level information throughout region 20 in order to arrive at an estimate of the service area of each of the cells in the network. To this end, region 20 is divided into bins 38, each comprising a small geographical area, preferably much smaller than the size of a cell. Bin sizes may typically be set between 20 x 20 m and 300 x 300 m, although larger or smaller bins may also be used, depending on application requirements. Typically, any given bin may belong to the service areas of multiple cells. The signal levels in each bin due to different antennas 22 are used in finding handover probabilities from cell to cell for the bin, and the handover probabilities are used in estimating the cell service areas, as described in detail hereinbelow. Computer 37 performs these functions under the control of software supplied for this purpose. The software may be conveyed to the computer in electronic form, over a network, for example, or it may be furnished on tangible media, such as CD-ROM.

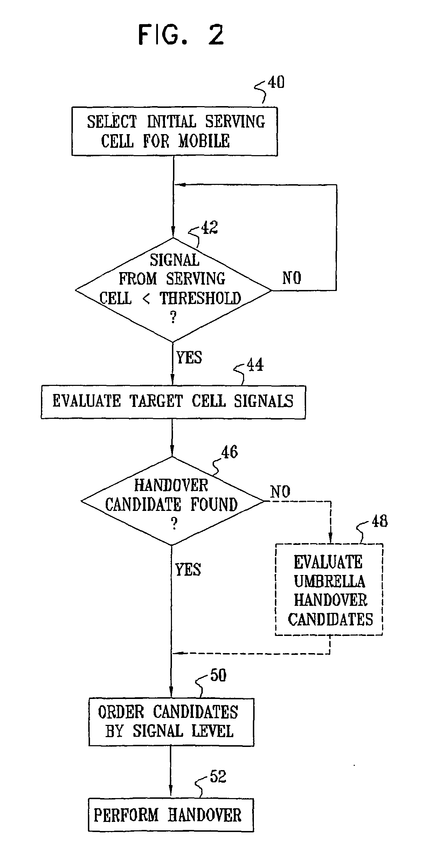

Fig. 2 is a flow chart that schematically illustrates a method for controlling handovers of mobile unit 23 between cells in the network of Fig. 1. This method is described here to aid in understanding how handover probability is used in estimating cell service area, in accordance with preferred embodiments of the present invention. The method shown in Fig. 2 is typical of many narrowband cellular networks, but it is described here in a simplified fashion and only by way of example. It ignores factors such as different priority levels that may be assigned to different cells, differences among mobile units, adaptive transmission power control and bit error rate (BER) conditions that may lead to handover. Other techniques for controlling handovers are known in the art, including more complex techniques that use some or all of these additional factors. The methods of the present invention for determining handover probabilities and estimating cell service areas may be adapted, *mutatis mutandis,* to work with substantially any of these techniques, as will be apparent to those skilled in the art.

When mobile unit 23 is turned on or enters service region 20, an initial serving cell is chosen to serve the mobile unit, at an initiation step 40. Typically, the initial serving cell is the one that gives the strongest signal in bin 38 in which the mobile station is located, or at least one of the strongest signals among the cells that may serve this bin. The downlink signal level of the serving cell is continually checked against a preset threshold (referred to hereinbelow as HoThrLevD1), in order to determine whether a handover could be warranted, at a threshold checking step 42. As long as the downlink signal level is above the threshold, the serving cell stays the same.

If the level of the downlink signal in the serving cell drops below the threshold, the downlink signals reaching the mobile unit from adjacent cells are received and evaluated, at a target cell evaluation step 44. Any of these adjacent cells may be a "target" for handover if its downlink signal meets the following criteria:

- The signal must exceed a minimum signal level (RxLevMinCell) for the target cell. This minimum level may be the same for all the target cells, or it may be set to an individual value for each target cell.
- The signal received from the target cell must be greater than the signal from the current serving cell plus a certain margin (HoMarginLev). The margin may be positive or negative, and it, too, may be set individually for each target cell.

Cells meeting the target criteria are added to a list of candidate cells.

It may occur that none of the target cells meet the candidate criteria, at a candidate failure step 46. In a simple, non-hierarchical cellular network, the absence of a suitable candidate for handover may lead to dropping of the call in progress by the mobile unit or to other compensatory measures, which are beyond the scope of the present invention. In a hierarchical network, however, a failure to find a suitable candidate at the same layer of the hierarchy leads to evaluation of possible handover candidates from other layers, at an umbrella handover checking step 48. A list is then assembled of candidate macrocells, whose downlink signal levels are above respective threshold values (HoLevUmbrella).

Whether a regular or umbrella handover is contemplated, the candidate cells for handover are arranged in order of their respective signal levels at the location of the mobile unit, at a cell ordering step 50. The mobile unit is then handed over, if possible, from its current serving cell to the first cell on the candidate list, at a handover step 52. If for some reason the handover to the first candidate fails, a handover to the next candidate on the list is attempted, and so forth until a handover is completed successfully.

In preferred embodiments of the present invention, in order to model handover probabilities (and thereby determine the actual service areas of the cells in region 20), the respective downlink signal levels received in each bin 38 from different antennas 22 are treated as independent random variables. Each of these random variables is typically assumed to have a normal distribution, with a mean and variance determined on the basis of either actual measurements in the field or estimates based on path loss and other computational criteria. Therefore, when service to mobile unit 23 is initiated, and at any time thereafter, any of the cells serving the bin in which the mobile unit is located may, at least momentarily, qualify as the "best" serving cell, by having the strongest instantaneous downlink signal level.

By the same token, for any given serving cell S of mobile unit 23 in a given bin 38, there is a non-zero probability $P_{SN}$ at any point in time that the mobile unit will be handed over from cell S to cell N, wherein N may be any of the cells with capable of serving the bin. This probability depends only on the current state of the mobile unit, i.e., on its current serving cell, and on the independent random values of the downlink signals reaching the mobile unit, irrespective of any previous state of the mobile unit. Therefore, the sequence of serving cells of the mobile unit in bin 38 is a Markov chain, which is governed by the matrix of transition probabilities $(P_{SN})$. (The theory of Markov chains is described, for example, by Feller in *An Introduction to Probability Theory and Its Application,* (John Wiley & Sons, 1968), Volume I, Chapter XV, pages 372-427.

As long as the transition probabilities $P_{SN}$ are stationary and non-zero, a Markov chain will yield a stationary, steady-state distribution of probabilities $p_s$ for all possible states in the chain. For each cell S, $p_S$ is the probability that at any point in time, mobile unit 23 in bin 38 will be served by cell S. The steady-state probabilities are independent of the initial state in the chain, i.e., they are indifferent to which cell was chosen as the initial serving cell in the chain. The probabilities $p_S$ can be found simply by solving the system of linear equations represented by the matrix $(P_{SN})$.

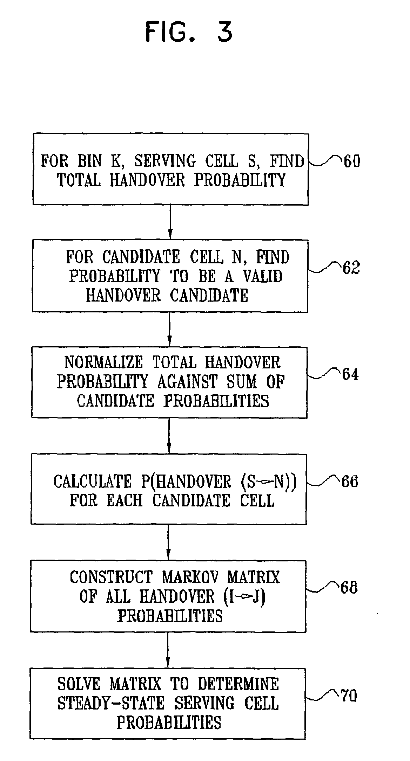

Fig. 3 is a flow chart that schematically illustrates a method for finding the probabilities that mobile unit 23 in a given bin 38 is served by each of a number of available cells, in accordance with a preferred embodiment of the present invention. The method uses the concepts of Markov chains described above. It is carried out independently for each bin in region 20. Fig. 3 therefore refers arbitrarily to a particular bin, known as bin K.

For each cell S that may serve a mobile unit in bin K, a total probability of making a handover attempt (from cell S to any other cell) is determined, at a handover probability calculation step 60. For signal level Signals, and handover threshold level HoThrLevD1, the total handover probability is simply given as P(Signal$_S$ < HoThrLevD1). The value of this probability is determined by the known mean and variance of Signal$_S$ and by the preset threshold level HoThrLevD1. If umbrella handovers must be considered, as well (i.e., in a hierarchical cellular system), two handover (HO) probabilities are calculated:

$$P(\text{Regular HO}) = P(\text{Signal}_S < \text{HoThrLevDl}) * P(\text{Valid HO}$$

$$\text{candidate} \mid \text{Signal}_S < \text{HoThrLevDl}) \qquad (1)$$

$$P(\text{Umbrella HO}) = P(\text{Signal}_S < \text{HoThrLevDl}) * P(\text{No valid HO}$$

$$\text{candidate} \mid \text{Signal}_S < \text{HoThrLevDl}) \qquad (2)$$

Next, for each cell N that may be the target of a handover from cell S in bin K, the probability that N will actually be a handover candidate is calculated, at a candidate probability calculation step 62, as follows:

$$P_N = P(Signal_N > \max\{RxLevMinCell_N, Signal_S +$$

$$HoMarginLev_N\}) \tag{3}$$

Here $RxLevMinCell_N$ is the minimum signal level for target cell N, and $HomarginLev_N$ is the power margin, as described above with reference to step 44 (Fig. 2). The probability of a regular (non-umbrella) handover, when Signals is less than the handover threshold, must then be given by:

$$P_{reg} = P(Valid\ HO\ candidate\ |\ Signal_S < HoThrLevDl)$$

$$= 1 - \prod_N (1 - P_N) \tag{4}$$

Similarly, the probability that an umbrella handover will take place under these circumstances is:

$$P_U = P(No\ valid\ HO\ candidate\ |\ Signal_S < HoThrLevDl)$$

$$= \prod_N (1 - P_N) \tag{5}$$

In a conventional, non-hierarchical cellular network, of course, $P_U$ is neglected.

To determine the actual handover probability $P_{SN}$ for each target cell N, the total handover probabilities calculated above are normalized against the sum of individual candidate probabilities, at a normalization step 64. The sum is taken over all the target cells N whose probabilities $P_N$ (according to equation (3)) are greater than some minimal threshold:

$$K_{norm} \sum N_{reg} (Signal_N)^* P_N = P(Signal_S < HoThrLevDl) * P_{reg} \tag{6}$$

The individual probability $P_N$ for each target cell N is weighted in the sum by $N_{reg}$, which represents the normal distribution of the signal level $Signal_N$. Alternatively, the weighting factors may be obtained by adding an offset to $Signal_N$, which may vary among the different target cells. Since the signal levels and the probabilities $P_N$ and $P_{reg}$ are known, equation (6) can be solved to determine the normalization constant $K_{norm}$.

The probability of a regular handover from serving cell S to target cell N for a mobile unit in bin K is then calculated, at a transfer probability calculation step 66, according to the formula:

$$P_{SN} = P(Regular\ HO(S,N)) = K_{norm} * N_{reg}(Signal_N) * P_N \tag{7}$$

If umbrella handover is unavailable or insignificant, equation (7) can be used to derive the entire matrix of Markov transition probabilities. The matrix is normalized, i.e., the matrix elements are adjusted so that the sum of elements in each column of the matrix is equal to one.

If umbrella handovers must be considered, the candidate cells for umbrella handover are determined and ordered according to their respective signal levels, as described above. The probability that cell N will be a candidate for umbrella handover is given by:

$$P_{UN} = P(\text{Signal}_N > \text{HoLevUmbrella}_N) \qquad (8)$$

wherein $\text{HoLevUmbrella}_N$ is the minimum signal threshold for umbrella handover to target cell N. The umbrella normalization constant $K_{Unorm}$ is then determined by solving the formula:

$$K_{Unorm} \sum N_U(\text{Signal}_N) * P_{UN} =$$

$$\{1-(1-P_U)*P(\text{Signal}_S < \text{HoThrLevDl})\} *(1- \prod_N (1 - P_{UN})) \quad (9)$$

Consequently, the probability of umbrella handover from serving cell S to target cell N is given by:

$$P(\text{Umbrella HO(S,N)}) = K_{Unorm} * N_U(\text{Signal}_N)*P_{UN} \qquad (10)$$

The entire Markov matrix $(P_{SN})$ of transition probabilities is assembled from the individual probability values given by equations (7) and (10), at a matrix construction step 68. The diagonal elements of the matrix (i.e., the probability that the mobile unit will remain in the same serving cell) are given by:

$$P_{SS} = 1 - \sum P(\text{Regular HO(S,N)}) - \sum P(\text{Umbrella HO(S,N)}) \qquad (11)$$

In the general, hierarchical case, the matrix includes both the regular and the umbrella transition probabilities for all candidate cells.

The matrix $(P_{SN})$ is solved to determine for each cell S the steady-state probability $p_S$ that S the serving cell of the mobile unit in bin K, at a matrix solution step 70. To ensure convergence of the Markov chain, zero entries in the matrix should preferably be removed or replaced with some small value $\varepsilon$ (typically around 1%), after which the matrix is renormalized. The vector of steady state probabilities $(p_S)$ is preferably found by solving the system of linear equations represented by:

$$((P_{SN}) - (I))(p_S) = 0 \qquad (12)$$

wherein (I) is the identity matrix, and $\Sigma p_S = 1$. For a robust solution, the equations are preferably solved by single-value decomposition (SVD), as is known in the art.

Alternatively, the handover probabilities may be determined by other methods, such as Monte Carlo simulation. A simulation-based method will typically be slower than the method described above, but it may be simpler to realize in practice. Assume each bin is served by a number of servers $s_1 ...s_N$ (with a known distribution of received signal levels, which are assumed to be independent). To estimate handover probabilities from $s_i$ (i=1...N) to all other servers, a poll of size M is assembled of the received signal level values, giving a matrix of size M x N. The handover rules applied in the system under consideration are then used to calculate the number of times a handover $HO_{i,j}$ occurs from $s_i$ to $s_j$ (j = 1...N). Each $HO_{i,j}$ is divided by M to give the estimated probabilities of handover. This procedure is repeated for all $s_i$ (i = 1...N) to give the complete handover matrix $P_{SN}$.

Regardless of how the handover probabilities are found, once the process of Fig. 3 has been completed for all bins 38 in region 20 (or in a sub-region of interest), the service area of every cell in the network can be determined, based on the steady-state probabilities of service ps by that cell in all bins in the region. Typically, the service area for cell S is taken to encompass all bins 38 in which $p_S$ is non-zero, or is greater than some minimum threshold. Accurate knowledge of the full cell service areas provides network planners with a more accurate picture of interactions between different parts of the cellular system, which can be useful in optimizing aspects of network configuration and operation. For example, the cell service areas may be used in accurately determining the elements of the impact matrix, which indicates the probability of interference between different pairs of cells (assuming that both cells use the same frequency). The impact matrix plays an important role in optimizing the positions of antennas 22 and their frequency allocation.

The service probabilities and handover probabilities determined above can also be useful in determining traffic densities in different sub-regions served by the network. Methods for determining and using traffic density characteristics in network optimization are further described in U.S. Patent Application 10/214,852, entitled, "Estimating Traffic Distribution in a Mobile Communication Network," filed August 7, 2002, which is assigned to the assignee of the present patent application.

Although preferred embodiments are described herein with particular reference to narrowband cellular networks, the principles of the present invention may also be applied to other types of mobile communication systems, and particularly to broadband cellular networks, such as CDMA-based networks. In CDMA networks, for example, a mobile unit may be served by a number of base station transceivers (BTS) simultaneously. This statement is equivalent to saying that each BTS has a handoff state (or handover state) available for the mobile unit or that the mobile unit receives service from a handoff state of the BTS. Therefore, cell service areas may be determined in a broadband cellular network by finding the probabilities that handoff states will be available for a mobile unit at each point in the network service area.

The probability of handoff state availability depends on the handoff algorithms and system parameters of the broadband cellular system, in a manner similar to that described above for narrowband cellular networks. For example, CDMA networks use standard handoff parameters T_add and T_drop to define when a BTS should be brought into or dropped from a particular handoff state. A handoff state should be added for the BTS to serve a mobile unit if the difference between the power received by the mobile unit from the strongest serving BTS and the power received from the BTS in question is less than T_add. Similarly, the BTS should be dropped from the handoff state if this difference is greater than T_drop. These algorithms and parameters may be applied to develop a probabilistic model of cell service area, in a manner analogous to that described above.

It will thus be appreciated that the preferred embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art, as defined by the appended claims.

**Claims**

1. A method for analyzing service in a mobile communication network, **characterized in that** the method comprises:

   estimating probabilities of handover of a mobile unit (23) at each of a multiplicity of locations (28) in a region (20) served by the network from each of a plurality of cells in the network to each other cell in the plurality; and
   based on the probabilities of handover, finding a respective steady-state probability that the mobile unit is served by each of one or more of the cells.

2. A method according to claim 1, wherein estimating the probabilities comprises determining signal levels received by the mobile unit from each of the cells in the plurality, and computing the probabilities responsive to the signal levels by making a comparison between the signal levels received by the mobile unit from a serving cell and from a target cell, selected from among the plurality of cells, and determining a likelihood of the handover from the serving cell to the target cell responsive to the comparison.

3. A method according to claim 1 or 2, wherein finding the respective steady-state probability comprises constructing a Markov chain transition matrix based on the probabilities of handover, and solving the transition matrix to calculate the respective steady-state probability that the mobile unit is served by each of the one or more of the cells at each of the locations.

4. A method according to any of the preceding claims, wherein estimating the probabilities at each of the multiplicity of locations comprises dividing the region into geographical bins, and wherein estimating the probabilities comprises computing the probability that each of the one or more of the cells is the serving cell in each of the bins.

5. A method according to claim 4, and comprising determining a service area of at least one of the cells based on the probability that the at least one of the cells is the serving cell at each of the locations.

6. A method according to any of the preceding claims, wherein estimating the probabilities of handover comprises estimating a likelihood of an umbrella handover in a hierarchical cellular system (HCS), and wherein finding the steady-state probability comprises computing the probability of service by the cells at different levels of the HCS.

7. Apparatus for analyzing service in a mobile communication network, comprising a computer (37), **characterized in that** the computer is adapted to estimate probabilities of handover of a mobile unit (23) at each of a multiplicity of locations (28) in a region (20) served by the network from each of a plurality of cells in the network to each other cell in the plurality, and to find, based on the probabilities of handover, a respective steady-state probability that the mobile unit is served by each of one or more of the cells.

8. Apparatus according to claim 7, wherein the region is divided into geographical bins, and wherein the computer is adapted to determine the probability that each of the one or more cells is the serving cell for the mobile unit in each of the bins and to determine the probability that each of the one or more of the cells is the serving cell in each of the bins.

9. A computer software product for analyzing service in a mobile communication network, the product comprising a computer-readable medium in which program instructions are stored, **characterized in that** the instructions, when read by a computer (37), cause the computer to estimate probabilities of handover of a mobile unit at each of a multiplicity of locations (28) in a region (20) served by the network from each of a plurality of cells in the network to each other cell in the plurality, and to find, based on the probabilities of handover, a respective steady-state probability that the mobile unit is served by each of one or more of the cells.

10. A product according to claim 9, wherein the instructions cause the computer to determine a service area of at least one of the cells based on the probability that the at least one of the cells is the serving cell at each of the locations.

**Patentansprüche**

1. Verfahren zur Analyse der Versorgung in einem Mobilfunk-Kommunikationsnetzwerk, **dadurch gekennzeichnet, daß** das Verfahren die folgenden Schritte umfaßt:

   Schätzen von Wahrscheinlichkeiten einer Verbindungsübergabe einer mobilen Einheit (23) von jeder aus einer Vielzahl von Zellen im Netzwerk zu jeder anderen Zelle in der Vielzahl an jedem aus einer Vielfalt von Standorten (28) in einer durch das Netzwerk versorgten Region (20); und
   auf den Verbindungsübergabe-WahrscheinliChkeiten beruhendes Herausfinden einer jeweiligen stabilen Wahrscheinlichkeit, mit der die mobile Einheit durch jede von einer oder mehreren der Zellen versorgt wird.

2. Verfahren nach Anspruch 1, wobei der Schritt des Schätzens der Wahrscheinlichkeiten die folgenden Schritte umfaßt: Bestimmen von Signalpegeln, die durch die mobile Einheit von jeder der Zellen in der Vielzahl empfangen werden, und Berechnen der Wahrscheinlichkeiten als Antwort auf die Signalpegel durch Durchführung eines Vergleichs zwischen den Signalpegeln, die durch die mobile Einheit von einer versorgenden Zelle und von einer Zielzelle, ausgewählt aus der Vielzahl von Zellen, empfangen werden, und Bestimmung einer Wahrscheinlichkeit der Verbindungsübergabe von der versorgenden Zelle zur Zielzelle als Antwort auf den Vergleich.

3. Verfahren nach Anspruch 1 oder 2, wobei der Schritt des Herausfindens der jeweiligen stabilen Wahrscheinlichkeit die folgenden Schritte umfaßt: Konstruieren einer Markovketten-Übergangsmatrix auf der Grundlage der Verbindungsübergabe-Wahrscheinlichkeiten und Lösen der Übergangsmatrix, um die jeweilige stabile Wahrscheinlichkeit zu berechnen, mit der die mobile Einheit an jedem der Standorte durch jede der einen oder mehreren der Zellen versorgt wird.

4. Verfahren nach einem der vorhergehenden Ansprüche, wobei der Schritt des Schätzens der Wahrscheinlichkeiten an jedem aus der Vielfalt von Standorten den folgenden Schritt umfaßt: Unterteilen der Region in geographische Kästchen, und wobei der Schritt des Schätzens der Wahrscheinlichkeiten den folgenden Schritt umfaßt: Berechnen der Wahrscheinlichkeit, mit der jede der einen oder mehreren der Zellen die versorgende Zelle in jedem der Kästchen ist.

5. Verfahren nach Anspruch 4 und den folgenden Schritt umfassend: Bestimmen eines Versorgungsbereichs mindestens einer der Zellen auf der Grundlage der Wahrscheinlichkeit, mit der die mindestens eine der Zellen die versorgende Zelle an jedem der Standorte ist.

6. Verfahren nach einem der vorhergehenden Ansprüche, wobei der Schritt des Schätzens der Verbindungsübergabe-Wahrscheinlichkeiten den folgenden Schritt umfaßt: Schätzen einer Wahrscheinlichkeit einer Umbrella-Verbindungsübergabe in einem hierarchischen zellularen System (HCS), und wobei der Schritt des Herausfindens der stabilen Wahrscheinlichkeit den folgenden Schritt umfaßt: Berechnen der Wahrscheinlichkeit einer Versorgung durch die Zellen auf unterschiedlichen Ebenen des HCS.

7. Vorrichtung zur Analyse der Versorgung in einem Mobilfunk-Kommunikationsnetzwerk, umfassend einen Computer (37), **dadurch gekennzeichnet, daß** der Computer dafür eingerichtet ist, Wahrscheinlichkeiten einer Verbindungsübergabe einer mobilen Einheit (23) von jeder aus einer Vielzahl von Zellen im Netzwerk zu jeder anderen Zelle in der Vielzahl an jedem aus einer Vielfalt von Standorten (28) in einer durch das Netzwerk versorgten Region (20) zu schätzen und auf der Grundlage der Verbindungsübergabe-Wahrscheinlichkeiten eine jeweilige stabile Wahrscheinlichkeit herauszufinden, mit der die mobile Einheit durch jede von einer oder mehreren der Zellen versorgt wird.

8. Vorrichtung nach Anspruch 7, wobei die Region in geographische Kästchen unterteilt ist und wobei der Computer dafür eingerichtet ist, die Wahrscheinlichkeit zu bestimmen, mit der jede der einen oder mehreren Zellen die versorgende Zelle für die mobile Einheit in jedem der Kästchen ist, und die Wahrscheinlichkeit zu bestimmen, mit der jede der einen oder mehreren der Zellen die versorgende Zelle in jedem der Kästchen ist.

9. Computersoftwareprodukt zur Analyse der Versorgung in einem Mobilfunk-Kommumkationsnetzwerk, wobei das Produkt ein computerlesbares Medium umfaßt, in dem Programmanweisungen gespeichert sind, **dadurch gekennzeichnet, daß** die Anweisungen, wenn sie durch einen Computer (37) gelesen werden, den Computer dazu veranlassen, Wahrscheinlichkeiten einer Verbindungsübergabe einer mobilen Einheit von jeder aus einer Vielzahl von Zellen im Netzwerk zu jeder anderen Zelle in der Vielzahl an jedem aus einer Vielfalt von Standorten (28) in einer durch das Netzwerk versorgten Region (20) zu schätzen; und auf der Grundlage der Verbindungsübergabe.. Wahrscheinlichkeiten eine jeweilige stabile Wahrscheinlichkeit herauszufinden, mit der die mobile Einheit durch jede von einer oder mehreren der Zellen versorgt wird.

10. Produkt nach Anspruch 9, wobei die Anweisungen den Computer veranlassen, einen Versorgungsbereich mindestens einer der Zellen auf der Grundlage der Wahrscheinlichkeit zu bestimmen, mit der die mindestens eine der Zellen die versorgende Zelle an jedem der Standorte ist.

## Revendications

1. Procédé pour analyser une desserte dans un réseau de communication de mobile, **caractérisé en ce que** le procédé comprend les étapes de :

    estimation de probabilités de transfert d'une unité mobile (23) à chacun d'une multiplicité d'emplacements (28) dans une région (20) desservie par le réseau à partir de chacune d'une pluralité de cellules dans le réseau jusqu'à chaque autre cellule dans la pluralité ; et
    sur la base des probabilités de transfert, découverte d'une probabilité de régime permanent respectif que l'unité mobile est desservie par chacune d'une ou de plusieurs des cellules.

2. Procédé selon la revendication 1, dans lequel l'estimation des probabilités comprend la détermination de niveaux de signaux reçus par l'unité mobile de chacune des cellules dans la pluralité, et calcul des probabilités sensible aux niveaux de signaux en effectuant une comparaison entre les niveaux de signaux reçus par l'unité mobile d'une cellule de desserte et à partir d'une cellule cible, sélectionnée à partir de la pluralité de cellules, et détermination d'une vraisemblance de transfert à partir d'une cellule de desserte jusqu'à la cellule cible sensible à la comparaison.

3. Procédé selon la revendication 1 ou 2, dans lequel la découverte de la probabilité de régime permanent respectif comprend la construction d'une matrice de transition de chaîne de Markov sur la base des probabilités de transfert, et résolution de la matrice de transition pour calculer la probabilité de régime permanent respectif que l'unité mobile est desservie par chacune d'une ou de plusieurs des cellules à chacun des emplacements.

4. Procédé selon l'une quelconque des revendications précédentes, dans lequel l'estimation des probabilités à chacun d'une multiplicité des emplacements comprend la division de la région en pôles géographiques, et dans lequel l'estimation des probabilités comprend le calcul de la probabilité que chacune d'une ou de plusieurs de cellules est la cellule de desserte dans chacun des pôles.

**5.** Procédé selon la revendication 4, et comprenant la détermination d'une zone de desserte d'au moins une des cellules sur la base de la probabilité qu'au moins une des cellules est la cellule de desserte à chacun des emplacements.

**6.** Procédé selon l'une quelconque des revendications précédentes, dans lequel l'estimation des probabilités de transfert comprend l'estimation d'une vraisemblance d'un transfert parapluie dans un système cellulaire hiérarchique (HCS), et dans lequel la découverte de la probabilité de régime permanent comprend le calcul de la probabilité de desserte par les cellules à différents niveaux du HCS.

**7.** Appareil pour analyser une desserte dans un réseau de communication mobile, comprenant un ordinateur (37), **caractérisé en ce que** l'ordinateur est adapté pour estimer les probabilités de transfert d'une unité mobile (23) à chacun d'une multiplicité d'emplacements (28) dans une région (20) desservie par le réseau à partir de chacune d'une pluralité des cellules dans le réseau jusqu'à chaque autre cellule dans la pluralité, et pour trouver, sur la base des probabilités de transfert, une probabilité de régime permanent respectif que l'unité mobile est desservie par chacune d'une ou de plusieurs des cellules.

**8.** Appareil selon la revendication 7, dans lequel la région est divisée en pôles géographiques, et dans lequel l'ordinateur est adapté pour déterminer la probabilité que chacune d'une ou de plusieurs cellules est la cellule de desserte pour l'unité mobile dans chacun des pôles et pour déterminer la probabilité que chacune d'une ou de plusieurs des cellules est la cellule de desserte dans chacun des pôles.

**9.** Produit logiciel informatique pour analyser une desserte dans un réseau de communication mobile, le produit comprenant un support lisible par ordinateur dans lequel des instructions de programme sont stockées, **caractérisé en ce que** les instructions, lorsqu'elles sont lues par un ordinateur (37), conduisent l'ordinateur à estimer des probabilités de transfert d'une unité mobile à chacun d'une multiplicité d'emplacements (28) dans une région (20) desservie par le réseau à partir de chacune d'une pluralité de cellules dans le réseau jusqu'à chaque autre cellule dans la pluralité et pour trouver, sur la base des probabilités de transfert, une probabilité de régime permanent respectif que l'unité mobile est desservie par chacune d'une ou de plusieurs des cellules.

**10.** Produit selon la revendication 9, dans lequel les instructions conduisent l'ordinateur à déterminer une zone de desserte d'au moins une des cellules sur la base de probabilité qu'au moins une des cellules est la cellule de desserte à chacun des emplacements.

FIG. 1

EP 1 493 297 B1

# FIG. 2

```
                              40
            ┌─────────────────────────┐
            │  SELECT INITIAL SERVING │
            │     CELL FOR MOBILE     │
            └─────────────────────────┘
                         │
                         │◄──────────────────┐
                         ▼    42             │
                      ╱─────────╲            │
                    ╱   SIGNAL    ╲          │
                  ╱  FROM SERVING   ╲   NO   │
                  ╲ CELL < THRESHOLD ╱───────┘
                    ╲      ?      ╱
                      ╲─────────╱
                         │ YES
                         ▼        44
            ┌─────────────────────────┐
            │ EVALUATE TARGET CELL SIGNALS │
            └─────────────────────────┘
                         │
                         ▼      46
                      ╱─────────╲
                    ╱  HANDOVER   ╲   NO
                    ╲ CANDIDATE FOUND ╱─ ─ ─ ─ ┐
                    ╲      ?      ╱             │
                      ╲─────────╱           48 ▼
                         │ YES        ┌ ─ ─ ─ ─ ─ ─ ─ ┐
                         │              EVALUATE      │
                         │            │ UMBRELLA
                         │              HANDOVER      │
                         │            │ CANDIDATES
                         │            └ ─ ─ ─ ─ ─ ─ ─ ┘
                         │◄ ─ ─ ─ ─ ─ ─ ─ ─ ─ ┘
                         ▼      50
            ┌─────────────────────────┐
            │    ORDER CANDIDATES     │
            │    BY SIGNAL LEVEL      │
            └─────────────────────────┘
                         │
                         ▼      52
            ┌─────────────────────────┐
            │    PERFORM HANDOVER     │
            └─────────────────────────┘
```

# FIG. 3

FOR BIN K, SERVING CELL S, FIND TOTAL HANDOVER PROBABILITY ⌇⌐60

FOR CANDIDATE CELL N, FIND PROBABILITY TO BE A VALID HANDOVER CANDIDATE ⌇⌐62

NORMALIZE TOTAL HANDOVER PROBABILITY AGAINST SUM OF CANDIDATE PROBABILITIES ⌇⌐64

CALCULATE P(HANDOVER (S→N)) FOR EACH CANDIDATE CELL ⌇⌐66

CONSTRUCT MARKOV MATRIX OF ALL HANDOVER (I→J) PROBABILITIES ⌇⌐68

SOLVE MATRIX TO DETERMINE STEADY-STATE SERVING CELL PROBABILITIES ⌇⌐70